# EUROPÄISCHE PATENTSCHRIFT

(11) **EP 4 362 654 B1**
(45) Veröffentlichungstag und Bekanntmachung des Hinweises auf die Patenterteilung: **14.05.2025**
(21) Anmeldenummer: 22741236.8
(22) Anmeldetag: 30.06.2022
(51) Int. Cl.: A01C 1/06

(54) **SAATGUTEINHEIT MIT KOHLE UND POLYMEREM SUPERABSORBER**
SEED UNIT COMPRISING COAL AND POLYMERIC SUPERABSORBENT
UNITÉ D'ENSEMENCEMENT COMPRENANT DU CHARBON ET UN SUPERABSORBANT POLYMÈRE

(30) Priorität: 30.06.2021 DE 102021116842; 22.02.2022 DE 102022104125
(43) Veröffentlichungstag der Anmeldung: 08.05.2024
(73) Patentinhaber: Schierbecker Handels GmbH & Co.KG, 24242 Felde (DE)
(72) Erfinder: SCHIERBECKER, Torben, 24242 Felde (DE)
(74) Vertreter: Peters, Hajo
(86) Internationale Anmeldenummer: PCT/EP2022/068107
(87) Internationale Veröffentlichungsnummer: WO 2023/275271

(56) Entgegenhaltungen:
- DE-U1- 202014 006 943
- US-A1- 2012 291 346

## Beschreibung

Die Erfindung betrifft eine Saatguteinheit (1), die mindestens einen Samen (2), eine Schicht (3), beispielsweise aus Pflanzenkohle, und einen polymeren Superabsorber (5), wie beispielsweise ein quervernetztes Acrylamid/Acrylsäure-Copolymer Kaliumsalz, sowie gegebenenfalls eine Hülle (9) und weitere Hilfsstoffe umfasst, wobei der polymere Superabsorber (5) eine Korngröße von 50 µm - 400 µm aufweist und nicht nur als Wasserspeicher sondern auch als Sprengmittel-Element dient.

Landwirtschaft ist schon heute unmittelbar vom Klimawandel betroffen. Die prognostizierte Verschiebung der Niederschläge in den Winter und lange trockene Sommer waren besonders im Jahr 2018 gut zu erkennen. Hinzu kommen vermehrt Extremwetterereignisse wie Starkregen, Stürme und Überschwemmungen. Ein wenig beachtetes Phänomen ist außerdem das Ausbleiben von Kältewellen. Für die Landwirtschaft in den mittleren Breiten ist dies jedoch von großer Bedeutung: Schädlinge bzw. deren Larven im Winter sind keinem starken Frost mehr ausgesetzt, so dass mehr von Ihnen überleben.

Hinzu kommt, dass die EU-Kommission die Anzahl der zugelassenen Herbizide, Insektizide, Fungizide reduziert, indem sie deren Zulassungen auslaufen lässt, keine neuen Mittel zulässt und den Einsatz von zugelassenen Mitteln begrenzt. Ihr Ziel ist es, sowohl Menschen als auch die Umwelt besser vor den verwendeten Giften zu schützen. Gleichzeitig fehlen der konventionellen Landwirtschaft jedoch Alternativen zum Schutz ihrer Kulturen, was dazu führt, dass es immer wieder zu Ausnahmegenehmigungen kommt, um die Landwirte vor Ernteausfällen zu schützen.

Ebenfalls von Verboten und Ausnahmegenehmigungen betroffen ist die Saatgutpillierung mit entsprechenden Neonicotinoiden. Bei der Pillierung wird das Saatgut vor der Ausbringung mit diversen Stoffen ummantelt (Coating). Das hat diverse Vorteile:
1. Homogenisierung der Saat. So kann die Saat einfacher und genauer maschinell ausgebracht werden, so dass die optimale Aussaatstärke der Körner je m² erreicht wird
2. Die Pillierungsmasse enthält auf die Kultur angepasste Pflanzenschutzmittel. So werden diese sehr gezielt und nur in kleiner Menge ausgebracht. Außerdem schützt die Pillierung die Pflanze in einer besonders kritischen Phase des Wachstums - der Keimung - besonders gut.
3. Der Pillierungsmasse können pflanzenspezifische Nährstoffe zugesetzt werden. Auch hier erfolgt die Zugabe besonders gezielt.

Angesichts der großen Herausforderungen in der Landwirtschaft ist eine Methode wie die Pillierung oder Pelletierung sinnvoll, da sie sehr gezielt Schwächen der jeweiligen Kulturen bekämpft und so zur Ernährungssicherheit beiträgt. Zudem bringt sie die Pflanzenschutzmittel nur dort ein, wo sie benötigt werden, was den Verbrauch der entsprechenden Stoffe maßgeblich senkt. Dementsprechend wünschenswert ist eine Weiterentwicklung der Pillierung oder Pelletierung, um die Landwirtschaft auf die Herausforderungen des 21. Jahrhunderts besser vorzubereiten.

Im Stand der Technik verschiedentlich die Verwendung von Kohle und/oder Polyacrylaten im Zusammenhang mit Saatgut beschrieben.

Die CN109168409A beispielsweise beschreibt ein Saat-Schmiermittel, in dem Pflanzenkohle u.a. mit einem Feuchthaltemittel aus Kalium- und Natrium-Acrylat gemischt wird. Dabei wird allerdings das Feuchthaltemittel aus Kalium- und Natrium-Acrylat sehr fein gemahlen ("1000 to 1500 meshes") und kann somit nicht als Sprengmittel dienen.

Die JPH09248017A beschreibt eine beschichtete Reis-Saat, in der beispielsweise Polyacryl-Harz auf die Saatoberfläche aufgetragen und beispielsweise aktiviertes Kohlepulver hinzugefügt wird. Dabei wird allerdings das Polyacrylat-Harz zum Zusammenbacken/-kleben verwendet und nicht in partikulärer Form.

Die DE 699 05 889 T2 (die deutsche Übersetzung der europäischen Patentschrift EP 1 091 641 B1) beschreibt einen Substratzuschlagsstoff als gießbares Granulat einer Korngröße von 0,3 bis 3.0 mm zur Verwendung in Keimungseinheiten. Der Substratzuschlagstoff umfasst verschiedene Substanzen bei denen unter anderem superabsorbierende Polymere (SAP, wobei in den Beispielen Stockosorb^{®} verwendet wird) genannt werden, sowie Füllstoffe wie Vermiculit, Holzfasern oder Mineralfasern, wobei als Bindemittel Polyethylenglykol und Polyvinylalkohol genannt werden. Dabei wird allerdings kein Pellet um das Saatkorn gebildet und das superabsorbierende Polymer wird direkt in die Erde eingebracht und dient dort nur als Wasserspeicher und nicht (auch) als Sprengmittel.

Die EP 373 348 A1 beschreibt einen Substratzuschlagsstoff, der ein poröses Ionenaustauscher-Material und einen porösen Mineral Zusatzstoff, sowie Holzkohle/aktivierte Kohle und Polyacrylamid enthält. Dabei wird allerdings erneut kein Pellet um das Saatkorn gebildet und das Polyacrylamid wird an der Pflanzenwurzel eingebracht und dient dort nur als Wasserspeicher und nicht (auch) als Sprengmittel

Die WO2004/ 036975 A1 beschreibt ein Verfahren zur Herstellung eines Pellets, in dem Torf mit beispielsweise einem Insektizid gemischt wurde und in dem ein Saatgut durch ein Loch in die getrocknete Mischung eingebracht wird. Abgesehen davon, dass der Torf im Gegensatz zur Pflanzenkohle einen sauren pH aufweist, wird hier auch kein Superabsorber eingesetzt.

Die EP 2680685 B1 beschreibt eine Zusammensetzung zur Beschichtung eines Samens wobei den Samen zumindest teilweise eine Schicht aus Guar oder derivatisiertem Guar umgibt.

In US 2012/291346 A1 wird des Weiteren eine Saatguteinheit in Form eines Pellets offenbart.

Wie aus dem oben angeführten Stand der Technik ersichtlich, besteht nach wie vor Bedarf an einer Saatguteinheit, aus einem Samen und mit einer diesen umgebenden vorteilhaften und adptierbaren Schicht als Ergebnis einer Pillierung oder Pelletierung, um sehr gezielt die Schwächen der jeweiligen Kulturen zu bekämpfen.

### ZUSAMMENFASSUNG UND DEFINITIONEN

Der Gegenstand der Erfindung ist definiert in Anspruch 1 mit bevorzugten Ausführungsformen in den abhängigen Ansprüchen.

Gegenüber dem Stand der Technik hat diese Saatguteinheit den Vorteil, dass - insbesondere wenn die Saatguteinheit die Form eines Pellets oder einer Pile annimmt, bzw. da die Schicht den Samen mindestens teilweise und insbesondere vollständig einschließt - die Kombination mit dem polymeren Superabsorber diese Schicht/das Pellet/diese Pille aufbricht, um nach Einpflanzung des Saatguts dem Samen/dem Keimling die Ausbreitung zu erleichtern. Dabei beruht der überraschende Keimungs-Erfolg der erfindungsgemäßen Saatguteinheit wohl darauf, dass der polymere Superabsorber, der im Stand nur als Wasserspeicher berücksichtigt wurde, sich bei Aufnahme von Wasser enorm ausdehnen kann und damit die Schicht/das Pellet/die Pille aufbrechen kann. Dabei scheint es allerdings so, dass der polymere Superabsorber möglicherweise eine bestimmte Korngröße aufweisen sollte, die nicht zu groß oder zu klein ausgewählt werden darf, um diesen Effekt zu erreichen.

In Experimenten ergibt sich, dass es bezüglich des Materials, aus der die Schicht besteht (insbesondere bezüglich der Kohle und des polymeren Superabsorbers) besonders günstige Bereiche der physikalischen Dimensionen, wie der Größe etc., gibt. Auf der einen Seite erlauben diese Dimensionen, insbesondere bezüglich des polymere Superabsorbers, wie oben beschrieben, dass dieser bei Aufnahme von Wasser aufgrund seiner Ausdehnung die Schicht/das Pellet/die Pille der Saatguteinheit aufbrechen kann und damit die Keimung erleichtert. Dabei sollte die Dimension (z.B. die Korngröße) auch nicht zu gering ausfallen, da ansonsten die Ausdehnung (durch das Aufquellen) des polymeren Superabsorbers evtl. nicht mehr ausreichen könnte, um in der Saatguteinheit die Schicht etc. aufzubrechen. Auf der anderen Seite sollte die Dimension/Korngröße des Materials der Schicht (insbesondere der Kohle und des polymeren Superabsorbers) auch deswegen nicht zu klein gewählt werden, damit die Schicht um den Samen (insbesondere auch, wenn diese aus mehreren aufeinander aufbauenden Teilschichten besteht,) nicht zu fest wird und damit ein Aufbrechen erschwert wird. Dabei sollte die Dimension (z.B. die Korngröße) des Materials auch nicht zu groß ausfallen, da ansonsten eine gleichmäßige Beschichtung des Samens, insbesondere bei mehreren dünneren Teilschichten, rein durch die Dimensionen des Materials schwieriger wird.

Dementsprechend könnte das Material der Schicht ( vorzugsweise ausgewählt aus aktivierter Kohle, Pflanzenkohle und/oder Biokohle) eine Dimension (wie eine Korngröße; insbesondere als Durchmesser (insbesondere bei eher kugeliger Form des Korns) oder evtl auch maximaler Achsenlänge (insbesondere bei eher eliptischer Form der Saatguteinheit)) von 30 µm - 220 µm, oder von 40 µm - 220, oder von 30 µm - 180 µm, oder von 50 µm - 200 µm, oder von 50 µm - 150 µm oder von 80 µm - 120 µm aufweisen, um gute Ergebnisse zu erzielen.

In Relation zur Dimension der Saatguteinheit (beispielsweise zu deren Durchmesser) ergibt sich damit ein Verhältnis zur Dimension des Schichtmaterials (beispielsweise zu deren Durchmesser, insbesondere der Kohle and des polymeren Superabsorbers). Ein jeweils bevorzugtes Verhältnis des Durchmessers der Saatguteinheit zum Durchmesser der Materialien der Schicht, insbesondere der Kohle and des polymeren Superabsorbers, beträgt beispielsweise von 650:1 bis 10:1, oder von 500:1 bis 20:1, oder von 400:1 bis 30:1, von 300:1 bis 40:1, oder von 200:1 bis 50:1. Dabei sind insbesondere der Durchmesser der Materialien der Schicht (3), insbesondere der Kohle and des polymeren Superabsorbers (5), als synonym zu deren Korngröße anzusehen. Dementsprechend könnte das Material der Schicht eine Dimension / eine Korngröße
- von 30 µm - 180 µm, bei einem Verhältnis des Durchmessers der Saatguteinheit zur Korngröße der Materialien der Schicht von beispielsweise 200:1 bis 50:1;
- von 50 µm - 150 µm, bei einem Verhältnis des Durchmessers der Saatguteinheit zur Korngröße der Materialien der Schicht von 300:1 bis 40:1, oder insbesondere von 200:1 bis 50:1;
- von 80 µm - 120 µm, bei einem Verhältnis des Durchmessers der Saatguteinheit zur Korngröße der Materialien der Schicht von 400:1 bis 30:1, oder von 300:1 bis 40:1, oder insbesondere von 200:1 bis 50:1;
aufweisen.

Der Begriff "Saatguteinheit" im Sinne der Erfindung ist eine Einheit, die einen Samen und eine diesen mindestens teilweise umgebenden "Schicht" umfasst, aus einem Samer und einer diese mindestens teilweise umgebenden Schicht besteht. Die

Saatguteinheit nimmt die Form eines Pellets oder einer Pille ein. Ebenfalls vorzugsweise umhüllt die "Schicht" den Samen (2) vollständig und/oder die "Schicht" und der Samen sind/bilden das Pellet/die Pille. Die Saatguteinheit ist insbesondere auf das Standard-Mass für handelsübliche Drillmaschinen angepasst, so dass die Saatguteinheit beispielsweise einen Durchmesser (insbesondere bei eher kugeliger Form der Saatguteinheit) oder maximaler Achsenlänge (bei eher eliptischer Form der Saatguteinheit)von 2 mm bis 20 mm, von 3 mm bis 15 mm, von 5 mm bis 20 mm oder von 3 mm bis 10 mm aufweist. Insbesondere kann die Schicht den Samen in Forms mindestens einer, vorzugsweise mehrerer Teilschichten - mindestens teilweise, vorzugsweise ganz - umgeben. Dabei kann die Schicht auf den Samen in mehrerer Teilschichten aufgetragen werden. Vorzugsweise werden diese Teilschichten in einer Dicke von 0,1 bis 5 mm, oder 0,5 bis 3 mm, oder von 0,5 mm, 1 mm, 2 mm, 3 mm, 4 mm oder 5 mm aufgetragen, damit konnen - je nach Wahl - beispielsweise Saatguteinheiten mit einem Durchmesser (insbesondere bei eher kugeliger Form der Saatguteinheit) oder evtl. maximaler Achsenlänge (insbesondere bei eher eliptischer Form der Saatguteinheit) von 2 mm bis 20 mm, von 3 mm bis 15 mm, von 5 mm bis 20 mm oder von 3 mm bis 10 mm oder auch von 5 mm bis 10 mm hergestellt werden. Insbesondere kann damit ausreichend Material um das Samenkorn verteilt werden, um gute Ergebnisse zu erzielen.

Der Begriff "Pellet" oder "Pille" im Sinne der Erfindung ist eine Form der "Saatguteinheit", in der die "Schicht" den "Samen" mindestens teilweise oder (wenigstens fast) vollständig umhüllt, so dass die "Schicht" und der "Samen", gebenenfalls mit einer "Hülle", das Pellet/die Pille sind/bilden. Dabei wird die Masse, aus der die "Schicht" besteht, mittels eines Pelletierungs- oder Pillierungs-Vorgangs auf den Samen aufgbracht. Das Pellett/die Pille hat meist eine runde oder elliptische Form. Pellett und Pille werden im Rahmen dieses Textes gleichbedeutend verwendet.

Der Begriff "Samen" im Sinne der Erfindung bezieht sich im Prinzip auf jede Art von Saatgut und umfasst insbesondere die Einzeleinheit eines solchen Saatguts. Insbesondere speziell kleinkörnige (<3,5mm) Saaten profitieren von der erfindungsgemäßen Saatguteinheit (Pelletierung/Pillierung), da diese dadurch auf das ober erwähnte Standard-Maß für handelsübliche Drillmaschinen angepasst werden können. Vorzugsweise ist der "Samen" ausgewählt aus Saaten für Möhren, Salate, Tomaten, Zuckerrüben, Futterrüben, Raps, Leindotter, Lein, Kohlgemüse, Rote Beete, Rettich, Pastinake, Sellerie, Petersilie, Schnittlauch, oder für Heilkräuter wie Baldrian, Thymian, Oregano, Spitzwegerich, oder Sonnenhut.

Der Begriff "Schicht" im Sinne der Erfindung bezieht sich auf eine den Samen zumindest teilweise, insbesondere vollständig umhüllende Masse oder Matrix, beispielswese in Folge eines - optionale mehrfachen - Pelletierungs oder Pillierungsverfahres (optional in mehreren Unterschichten), die einen polymeren Superabsorber und einen Kleber biologischen Ursprungs und gegebenenfalls weitere Hilfsstoffe enthält. Der/ein Hauptbestandteil der Schicht ist beispielsweise Kohle (die eine Matrix bilden kann), wobei diese Kohle vorzugsweise ausgewählt ist aus aktivierter Kohle, Pflanzenkohle und/oder Biokohle. Vorzugsweise enthält die "Schicht" zu 5 - 30 Gew.-% oder zu 10 - 20 Gew.-% einen polymeren Superabsorber. Die "Schicht" kann vorzugsweise auch 1 - 15 Gew.-% Kleber biologischen Ursprungs, 5 - 30 oder 10 - 20 Gew.-% polymeren Superabsorber und 55 - 94 Gew.-% Kohle enthalten. Die "Schicht" kann insbesondere auch 1 - 15 Gew.-% Kleber biologischen Ursprungs, 5 - 30 oder 10 - 20 Gew.-% polymeren Superabsorber, 1 - 20 oder 5 - 15 Gew.-% Nährstoffe oder Nährstoffelemente (sofern vorhanden), 1 - 10 Gew.-% Repellent- und/oder Fraßhemmer-Elemente (sofern vorhanden), 0.001 - 1 Gew.-% Stärkungsmittel oder Stärkungsmittel-Elemente (sofern vorhanden) enthalten, wobei der Rest der "Schicht" aus Kohle besteht. Gegebenenfalls kann die "Schicht" von einer Hülle umgeben sein. Es ist auch bevorzugt, wenn die "Schicht" mindestens 75 Gew.-%, mindestens 90 Gew.-%, mindestens 94 Gew.-% oder mindestens 95 Gew.-% Kohle enthält. Vorzugsweise sind der Superabsorber und die gegebenenfalls weiteren Hilfsstoffe in der "Schicht" - als Partikel - eingebettet, und/oder der Kleber biologischen Ursprungs in der "Schicht" und insbesondere in der Kohle, annähernd gleichmäßig oder homogen verteilt ist. Insbesondere kann die Schicht den Samen in Forms mindestens einer, vorzugsweise mehrerer Teilschichten - mindestens teilweise, vorzugsweise ganz - umgeben. Dabei kann die Schicht auf den Samen in mehrerer Teilschichten aufgetragen werden. Vorzugsweise werden diese Teilschichten in einer Dicke von 0,1 bis 5 mm, oder 0,5 bis 3 mm, oder von 0,5 mm, 1 mm, 2 mm, 3 mm, 4 mm oder 5 mm aufgetragen, damit konnen - je nach Wahl - beispielsweise Saatguteinheiten von 2 mm bis 20 mm, von 3 mm bis 15 mm, von 5 mm bis 20 mm oder von 3 mm bis 10 mm oder auch von 5 mm bis 10 mm hergestellt werden. Insbesondere kann damit ausreichend Material um das Samenkorn in der "Schicht" verteilt werden, um gute Ergebnisse zu erzielen. Vorzugsweise kann das Material der Schicht ( der polymere Superabsorber und die Kohle, vorzugsweise ausgewählt aus aktivierter Kohle, Pflanzenkohle und/oder Biokohle, mit dem Kleber biologischen Ursprungs etc.) eine Korngröße von 50 µm - 200 µm, oder von 50 µm - 150 µm oder von 80 µm - 120 µm aufweisen. Der Begriff "Kohle" im Sinne der Erfindung bezieht sich prinzipiell auf jede Art von Kohle, wobei insbesondere aktivierte Kohle, Holzkohlem Biokohle oder Pflenzenkohle bevorzugt sind. Ganz besonders bevorzugt ist eine pyrolytisch erzeugte Pflanzenkohle. Ein Beispiel ist Pflanzenkohle von HerCarbo, beispielsweise aus Kräutern oder Waldhackschnitzeln. Es ist besonders bevorzugt, wenn die Kohle vorzugsweise gemahlen ist, und/oder wenn die Korngröße der Kohle ≤ 150 µm, ≤ 200 µm, ≤ 250 µm oder ≤ 300 µm, insbesondere ≤ 200 µm ist. Es ist auch besonders bevorzugt, wenn die Korngröße der Kohle ≤ 150 µm, ≤ 200 µm, ≤ 250 µm oder ≤ 300 µm, insbesondere ≤ 200 µm ist oder oder 30 µm - 200 µm, 40 µm - 200 µm, 30 µm - 180 µm oder 50 µm - 150 µm, oder 80 µm - 120 µm ist. Es ist auch bevorzugt, wenn die Kohle in der "Schicht" zu mindestens 50 Gew.-%, zu mindestens 75 Gew.-%, zu mindestens 90 Gew.-%, zu mindestens 95 Gew.-%, zu mindestens 99 Gew.-% oder zu 100 Gew.-% aus aktivierter Kohle, Pflanzenkohle und/oder Biokohle, vorzugsweise aus aktivierter Kohle bzw. aus Pflanzenkohle, insbesondere pyrolytisch erzeugter Pflanzenkohle besteht. Insbesondere enthält - Dank Ihrer Zusammensetzung - beispielsweise die Pflanzenkohle Spurenelemente, die dem aus dem Samen entstehenden Keimling zeitlich und räumlich unmittelbar zur Verfügung stehen.

Die Basis der erfindungsgemäßen Saatguteinheit und insbesondere der Masse, aus der die "Schicht" besteht, soll insbesondere pyrolytisch erzeugte Pflanzenkohle bilden. Pflanzenkohle hat zwei wichtige Eigenschaften. Sie hat eine sehr große Oberfläche, die Nährstoffe und Wasser aufnehmen kann und Mikroorganismen als Lebensraum dient. So schützt sie den Keimling vor Trockenperioden, senkt die Anforderungen an weitere Bodenbewässerungen und schafft ideale Wachstumsbedingungen. Darüber hinaus ist ihre Struktur über mehrere Jahrzehnte stabil. Da sie meinst zu über 90 % auf Kohlenstoff besteht, wird dieser dauerhaft der Atmosphäre entzogen.

Der Begriff "polymerer Superabsorber" im Sinne der Erfindung wird definiert als ein Polymer, das in der Lage ist, ein Vielfaches seines Eigengewichts an polaren Flüssigkeiten aufzusaugen. Beispiele sind mineralische oder Stärkebasierendee Polyacrylate. Vorzugsweise dient der "polymere Superabsorber" als Wasserspeicher- und Sprengmittel-Element dient, und/oder ist fest bzw. kristallin oder gleichzeitig fest und kristallin, und/oder ist vermahlen und/oder weist eine Korngröße von 100 µm - 350 µm oder von 150 µm - 300 µm oder von 175 µm - 225 µm auf. Der "polymere Superabsorber" kann auch eine Korngröße von 50 µm - 200 µm, oder von 50 µm - 150 µm oder von 80 µm - 120 µm aufweisen. Vorzugsweise ist der Superabsorber in der "Schicht" - als Partikel - eingebettet und/oder zu 5 - 30 Gew.-% oder zu 10 - 20 Gew.-% in der "Schicht" enthalten. Vorzugsweise ist der "polymere Sperabsorber" ein Polyacrylamid oder eine vernetzte Arylamid/Acrylsäure, ein Polyacrylat, ein Acrylamid/Acrylsäure-Copolymer, das gegebenenfalls quervernetzt sein kann, oder Mischungen davon. Besonders bevorzugt ist der "polymere Sperabsorber" ein Natriumpolyacrylat oder Kaliumpolyacrylat oder Acrylamid/Acrylsäure-Copolymer Kalium- oder Natriumsalz oder ein quervernetztes Acrylamid/Acrylsäure-Copolymer Kalium- oder Natriumsalz, eine vernetzte Arylamid/Acrylsäure in Form eines Kalium- oder Natriumsalzes oder Mischungen davon. Insbesondere bevorzugt ist der "polymere Sperabsorber" ein Kaliumpolyacrylat oder Acrylamid/Acrylsäure-Copolymer Kaliumsalz oder ein quervernetztes Acrylamid/AcrylsäureCopolymer Kaliumsalz oder eine vernetzte Arylamid/Acrylsäure in Form eines Kaliumsalzes oder Mischungen davon. Ein besonders bevozugtes Beispiel ist Stockosorb^{®}. Alternativ ist der "polymere Sperabsorber" ein biologischer polymerer Superabsorber ist, ausgewählt aus einem Cellulose- oder Lignin-basierten Hydrogel oder einem Naturkautschuk-Derivat, vorzugsweise ausgewählt aus einem Cellulose- oder Lignin-basierten Hydrogel. Ein besonders bevozugtes Beispiele sind Polyter GT oder Agrobiogel.

Der Begriff "Kleber biologischen Ursprungs" im Sinne der Erfindung wird definiert als jede Form von bindendem Material biologischen Ursprungs, dass die Bestandteile der "Schicht" wie die Kohle bindet und mit dem polymeren Superabsorber und gegebenenfalls den Hilfsstoffen in der "Schicht" einbindet, wobei die "Schicht" auch - bei einem Pellet - mit dem Samen (oder um ihn herum) verbunden wird. Vorzugsweise ist der Kleber biologischen Ursprungs ein proteinhaltiger Kleber, insbesondere ein Kleber auf Glutin-Basis, ein Kleber auf Fibrin-Basis, ein Kleber auf Basis der Aminosäure DPPA oder ein Fischleim. Besonders bevorzugt ist der Kleber biologischen Ursprungs ein Fischleim aus Kaltwasserfisch. Der Kleber biologischen Ursprungs kann auch Zuschlagsstoffe wie Gummi arabicum oder Proteinhydrolysat enthalten. Vorzugsweise ist der Kleber biologischen Ursprungs in der "Schicht" und insbesondere in der Kohle annähernd gleichmäßig oder homogen verteilt. Die "Schicht" kann vorzugsweise 1 - 15 Gew.-% Kleber biologischen Ursprungs enthalten.

Der Begriff "Hülle" im Sinne der Erfindung wird definiert als feste Umfüllung der Saatguteinheit, wobei die Hülle die Schicht vorzugsweise (fast) vollständig einschließt. Vorzugsweise besteht die Hülle aus Gelatine, Cellulose, Carrageen, Stärke oder Leim.

Der Begriff "Hilfsstoffe" im Sinne der Erfindung wird definiert als Stoffe, die dem aus dem Samen entstehenden Keimling zeitlich und räumlich unmittelbar zur Verfügung stehen und zusätzliche Biostimulanzen bieten, um eine hohe Keim- und Wachstumsrate sicherzustellen. Insbesondere umfassen die Hilfsstoffe Nährstoffe oder Nährstoffelemente, Repellentien oder Fraßhemmer-Elemente und Stärkungsmittel oder Stärkungsmittel-Elemente. Vorzugsweise sind die Hilfsstoffe in der "Schicht" eingebettet, insbesondere sind die Hilfsstoffe in der "Schicht" als Partikel eingebettet. Die "Schicht" kann vorzugsweise 1 - 20 oder 5 - 15 Gew.-% Nährstoffe oder Nährstoffelemente (sofern vorhanden), 1 - 10 Gew.-% Repellentien und/oder Fraßhemmer-Elemente (sofern vorhanden) und 0.001 - 1 Gew.-% Stärkungsmittel oder Stärkungsmittel-Elemente (sofern vorhanden) enthalten.

Der Begriff "Nährstoffe oder Nährstoffelemente" im Sinne der Erfindung wird definiert als Makro- u. Mikronährstoffe, die dem aus dem Samen entstehenden Keimling zeitlich und räumlich unmittelbar zur Verfügung stehen. Vorzugsweise sind dies Düngemittel, beispielsweise auf Proteinbasis wie z.B. Vinasse/Schlempe oder Proteinhydrolysate. Vorzugsweise sind die Nährstoffe oder Nährstoffelemente auf organischer Basis sind, wobei diese vorzugsweise Düngemittel auf Proteinbasis sind, vorzugsweise Vinasse/Schlempe oder Proteinhydrolysate. Die "Schicht" kann vorzugsweise 1 - 20 oder 5 - 15 Gew.-% Nährstoffe oder Nährstoffelemente (sofern vorhanden)enthalten. Vorzugsweise sind die "Nährstoffe oder Nährstoffelemente" in der "Schicht" - insbesondere als Partikel - eingebettet.

Insbesondere wird die Pflanzenkohle mit einem organischen Dünger "aufgeladen" werden. Dieser Dünger steht dem Keimling zeitlich und räumlich unmittelbar zur Verfügung und bietet zusätzliche Biostimulanzen. So wird eine hohe Keim- und Wachstumsrate sichergestellt.

Der Begriff "Repellent- und/oder Fraßhemmer-Elemente" im Sinne der Erfindung wird definiert als als Stoffe, die dem aus dem Samen entstehenden Keimling zeitlich und räumlich unmittelbar vor Schädigung urch Schädlinge schützen. Insbesondere beruhen die erfindungsgemäß eingesetzten Repellentien und Fraßhemmer Elemente auf Aroma- oder Extraktbasis, vorzugsweise auf Pflanzen- und/oder Aromen-Extrakt-Basis, insbesondere auf ätherische Pflanzen- und/oder Aromen-Extrakt-Basis. Insbesondere sind die efindungsgemäß eingesetzten Repellentien und Fraßhemmer Elemente Extrakte aus Cayennepfeffer, Neembaum Ingwer, Oregano, Geranien (insbesondere aus südafrikanischer Kapland Geranie), Zistosenkraut oder Thymian. Vorzugsweise sind die erfindungsgemäß eingesetzten Repellentien und Fraßhemmer Elemente (sofern vorhanden) in der "Schicht" eingebettet, wobei die Repellent- und/oder Fraßhemmer-Elemente (sofern vorhanden) zu 1 - 10 Gew.-% in der "Schicht" vorliegen. Vorzugsweise sind die "Repellent- und/oder Fraßhemmer-Elemente" in der "Schicht" - insbesondere als Partikel - eingebettet.

Es ist ein weiteres Ausführungsbeispiel der Saatguteinheit (dem Pellet) Pflanzenschutzmittel auf natürlicher Basis hinzuzufügen. Dabei wird nicht auf eine Abtötung der Schädlinge, sondern auf eine zielgerichtete Vertreibung durch z.B. ätherische Öle, welche den Schädling davon abhalten, das Samenkorn zu schädigen, gesetzt.

Der Begriff "Stärkungsmittel oder Stärkungsmittel-Elemente" im Sinne der Erfindung wird definiert als Mittel, die dazu bestimmt sind, die Pflanze fit zu machen und zudem gesund zu halten. Sie können bei Pflanzen beispielsweise die Frostresistenz erhöhen, die Nährstoffnutzung optimieren und das Pflanzenwachstum verbessern. Ein Pflanzenstärkungsmittel versorgt weder die Pflanze mit Nährstoffen, noch bekämpft es Wildkräuter oder einen Parasiten.Wenn die Pflanze jedoch erst einmal krank ist, können Pflanzenstärkungsmittel die Krankheit nicht bekämpfen. Nach der Überwindung der Krankheit können Pflanzenstärkungsmittel jedoch wiederum helfen, das Pflanzenwachstum und die Regeneration zu beschleunigen. Ein bevorzugtes Stärkungsmittel oder Stärkungsmittel-Element ist ein aus Pechnelke und Lupine gewonnener stärkender Wirkstoff. Vorzugsweise liegen die Stärkungsmittel oder Stärkungsmittel-Elemente (sofern vorhanden) zu 0.001 - 1 Gew.-% in der "Schicht" vor. Vorzugsweise sind die "Stärkungsmittel oder Stärkungsmittel-Elemente" in der "Schicht" - insbesondere als Partikel - eingebettet

Ein weiterer Gegenstand der vorliegenden Offenlegungsschrift ist ein Verfahren zur Herstellung einer erfindungsgemäßen Saatguteinheit wie oben besprochen, mit den folgenden Schritten:
**SCHRITT I:**
   - Vorlegen der Kohle in gemahlener Form als Bestandteil der "Schicht"
      - Mischung mit einem polymeren Superabsorber;
      - gegebenenfalls Mischung mit Nährstoffen oder Nährstoffelementen und/oder
      - gegebenenfalls Mischung mit Stärkungsmitteln oder Stärkungsmittel-Elementen,
      - wobei die optionale Mischung vor Überführung in ein Mischaggregat (A) oder in dem Mischaggregat (A), stattfindet
   - Vermahlung in einer Mahlapparatur (B);
optionaler **SCHRITT II:**
   gegebenenfalls Zugabe mindestens einer Art von Repellent- und/oder Fraßhemmer-Elementen, vorzugsweise mehrerer verschiedener zuvor in einem Mischaggregat gemischter Arten von Repellent- und/oder Fraßhemmer-Elementen,
   zu der gemahlenen Mischung aus Stufe I in einem Mischaggregat (D);
**SCHRITT III:**
   Zugabe des Samens (2) und des Klebers biologischen Ursprungs (3), wobei diese gegebenenfalls vor der Zugabe gemischt werden, zu der Mischung aus Stufe II in einer Pillieranlage/Pelletieranlage (E) wobei der Samen (2) den Kern bildet, um den herum pilliert, bzw. pelletiert wird.

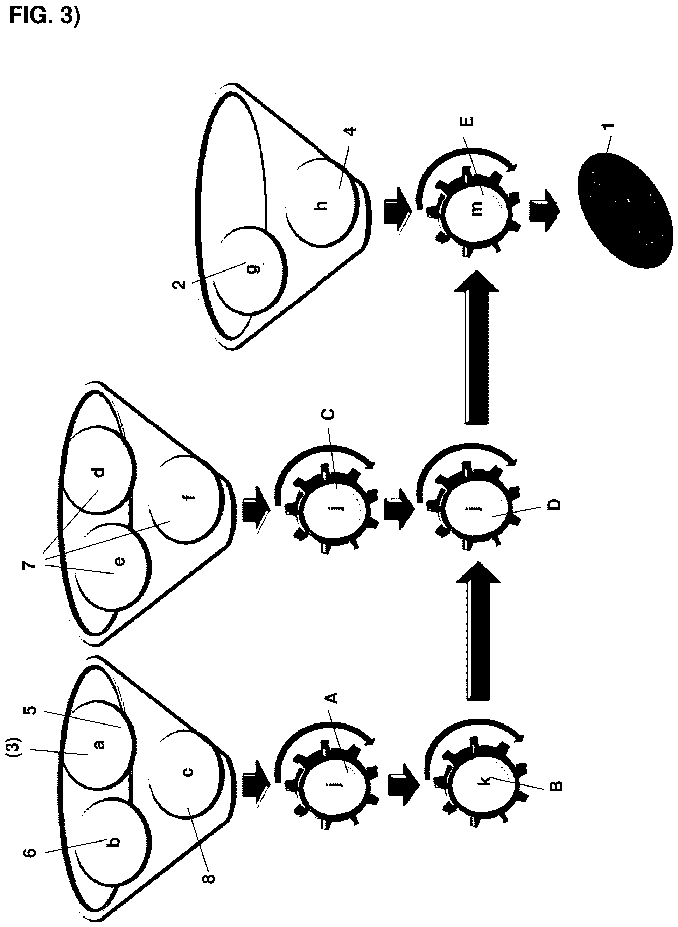

Der Begriff "Mischaggregat" im Sinne der Offenlegungsschrift wird definiert als Apparatur (s. (A), (C), (D) in Fig. 3)), in der Bestandteile der erfindungsgemäßen Saatguteinheit, insbesondere Bestandteile der "Schicht", wie die (matrixbildende) Kohle, der polymere Superabsorber, (evtl. der Kleber biologischen Ursprungs) und gegebenenfalls weitere Hilfsstoffe, vor Vermahlung oder Pelettierung/Pillierung miteinander vermischt werden.

Der Begriff "Mahlapparatur" im Sinne der Offenlegungsschrift wird definiert als Apparatur, in der Bestandteile der erfindungsgemäßen Saatguteinheit, insbesondere Bestandteile der "Schicht", wie die (matrixbildende) Kohle, der polymere Superabsorber, (evtl. der Kleber biologischen Ursprungs) und gegebenenfalls weitere Hilfsstoffe, vor einer evtl. Pelletierung oder Pillierung gemahlen werden.

Der Begriff "Pillieranlage" im Sinne der Offenlegungsschrift wird definiert als Apparatur, in der die erfindungsgemäße Saatguteinheit zu einem Pellet oder einer Pille geformt wird. Dabei bildet der Samen den Kern, um den herum sich - über das Pelettierungs- / Pillerungsverfahren - aus den Bestandteilen der "Schicht", wie der (matrixbildende) Kohle, dem polymere Superabsorber und gegebenenfalls weiteren Hilfsstoffen mit Hilfe des Klebers biologischen Ursprungs eine Schicht und somit das Pellet/die Pille bildet.

Der Begriff "pilliert" oder "pelletiert" im Sinne der Offenlegungsschrift wird definiert als Verfahrensschritt bei dem in einer Apparatur (einer Pillerungs- oder Pelletierungsanlage) die erfindungsgemäße Saatguteinheit zu einem Pellet oder einer Pille geformt wird. Dabei bildet der Samen den Kern, um den herum sich - über das Pelettierungs- / Pillerungsverfahren - aus den Bestandteilen der "Schicht", wie der (matrixbildende) Kohle, dem polymere Superabsorber und gegebenenfalls weiteren Hilfsstoffen mit Hilfe des Klebers biologischen Ursprungs eine Schicht und somit das Pellet/die Pille bildet.

Ein weiterer Gegenstand der vorliegenden Offenlegungsschrift ist ein Saatguteinheit umhüllt von einer "Schicht" aus Pflanzenkohle, herstellbar durch ein Verfahren umfassend die folgenden Schritte
**SCHRITT I:**
   Vorlegen der Pflanzenkohle in gemahlener Form als Bestandteil der Schicht (3), Mischung mit einen polymeren Superabsorber (5), enthaltend ≥50 Gew.-% Polyacrylat;
   gegebenenfalls Mischung mit Nährstoffen oder Nährstoffelementen (6) und/oder gegebenenfalls Mischung mit Stärkungsmitteln oder Stärkungsmittel-Elementen (8),
   wobei die optionale Mischung vor Überführung in ein Mischaggregat (A) oder in dem Mischaggregat (A), stattfindet
   Vermahlung in einer Mahlapparatur (B);
optionaler **SCHRITT II:**
   Gegebenenfalls Zugabe mindestens einer Art von Repellent- und/oder Fraßhemmer-Elementen (7), vorzugsweise mehrerer verschiedener zuvor in einem Mischaggregat (C) gemischter Arten von Repellent- und/oder Fraßhemmer-Elementen (7),
   zu der gemahlenen Mischung aus Stufe I in einem Mischaggregat (D);
**SCHRITT III:**
   Zugabe des Samens (2) und des Klebers biologischen Ursprungs (4), wobei diese gegebenenfalls vor der Zugabe gemischt werden, zu der Mischung aus Stufe II in einer Pillier- / Pelettieranlage (E) wobei der Samen (2) den Kern bildet, um den herum pilliert, bzw. pelletiert wird.

### BESCHREIBUNG DER ABBILDUNGEN

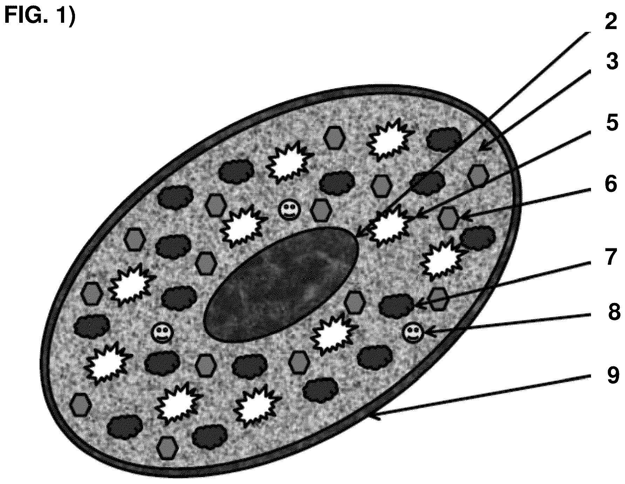

**Fig. 1****)** zeigt schematische eine erfindungsgemäße Saatguteinheit (1) in Form eines Pellets mit einem Samen (2), einer Schicht (3) (aus Kohle mit einem Kleber biologischen Ursprungs (4)), einem polymeren Superabsorber (5), einer Hülle (9), Nährstoffen (6), Repellentien und Fraßhemmer-Elementen (7) und Stärkungsmitteln (8).

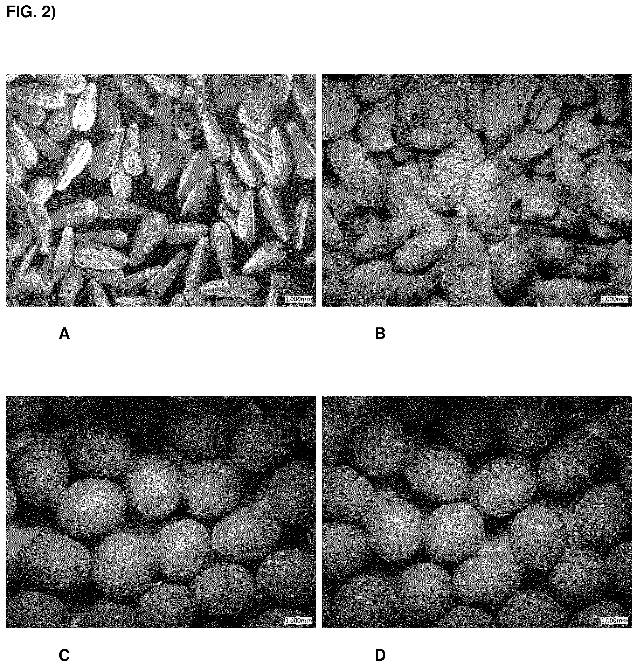

**Fig. 2****)** zeigt in **A** ein Saatgut aus Baldriansamen bestehend aus mehreren Samen (2) und in **C** die daraus nach dem Verfahren gemäß der Erfindung erhaltene erfindungsgemäße Saatguteinheit (1). Die Abbildung zeigt außerdem in **B** ein Saatgut aus Himbeersamen bestehend aus mehreren Samen (2) und in **D** die daraus nach dem Verfahren gemäß der Erfindung erhaltene erfindungsgemäße Saatguteinheit (1).
**Fig. 3****)** zeigt schematisch ein Verfahren zur Herstellung einer erfindungsgemäßen Saatguteinheit (1) mit den folgenden Schritten:
   **SCHRITT I:**
      - Vorlegen der Kohle in gemahlener Form als Bestandteil der Schicht (3) bereits gemischt mit dem polymeren Superabsorber (5);
      - Mischung mit Nährstoffen (6) und Mischung mit Stärkungsmitteln (8) in einem Mischaggregat (A)
      - Vermahlung in einer Mahlapparatur (B);
   **SCHRITT II:**
      Mischung (in diesem Falle dreier Arten) von Repellentien und Fraßhemmer-Elementen (7) in einem Mischaggregat (C) und Zugabe zu der gemahlenen Mischung aus Stufe I in einem Mischaggregat (D);
   **SCHRITT III:**
      Zugabe des Samens (2) und des Klebers biologischen Ursprungs (4) zu der Mischung aus Stufe II in einer Pillieranlage (E), wobei der Samen (2) den Kern bildet, um den herum pilliert, bzw. pelletiert wird, so dass die Saatguteinheit (1) entsteht.

Dabei stehen in Fig. 3 die folgenden Buchstaben optional für die folgende Information:
(a) Pflanzenkohle 70% m/m + Kalium-Polyacrylat 19,998% m/m
(b) Org. Düngemittel 10% m/m
(c) Pflanzen-Stärkungs-Mittel 0,002% m/m
(d) Neemöl 15% m/m
(e) Cayennepfefferextrakt 4% m/m
(f) Ätherisches Thymianöl 1% m/m
(g) Saatgut
(h) Pillierhilfsstoff (Bindemittel)
(j) Mischaggregat
(k) Vermahlung
(m) Pillieranlage.

### DETAILLIERTE BESCHREIBUNG

Wie oben gesagt ist der Haupt-Gegenstand der vorliegenden Erfindung eine Saatguteinheit (1) (insbesondere in Form eines Pellets) umfassend mindestens (insbesondere genau) einen Samen (2), eine Schicht (3), einen polymeren Superabsorber (5) und einen Kleber biologischen Ursprungs (4), sowie gegebenenfalls eine Hülle (9) und weitere Hilfsstoffe, wobei die Schicht (3) den Samen (2) mindestens teilweise (insbesondere vollständig) einschließt, wobei
- die Schicht (3) den Kleber biologischen Ursprungs (4) und den polymeren Superabsorber (5) umfasst; und
- die Schicht (3) Kohle (insbesondere aktivierte Kohle, Biokohle oder Pflanzenkohle) umfasst,
- wobei die Schicht (3) zu mindestens 50 Gew.-% aus Kohle (insbesondere aus aktivierter Kohle, Biokohle oder Pflanzenkohle) besteht.

In einer bevorzugten Ausführungsform der erfindungsgemäßen Saatguteinheit (1) besteht die Kohle in der Schicht (3) zu mindestens 75 Gew.-%, zu mindestens 90 Gew.-%, zu mindestens 95 Gew.-%, oder zu mindestens 99 Gew.-% aus aktivierter Kohle, Pflanzenkohle und/oder Biokohle, vorzugsweise aus aktivierter Kohle bzw. aus Pflanzenkohle, wobei die Kohle vorzugsweise gemahlen ist, und/oder wobei die Korngröße der Kohle ≤ 150 µm, ≤ 200 µm, ≤ 250 µm oder ≤ 300 µm, insbesondere ≤ 200 µm ist.In einer bevorzugten Ausführungsform der erfindungsgemäßen Saatguteinheit (1) besteht die Kohle in der Schicht (3) zu mindestens 50 Gew.-%, zu mindestens 75 Gew.-%, zu mindestens 90 Gew.-%, zu mindestens 95 Gew.-%, oder zu mindestens 99 Gew.-% aus aktivierter Kohle, Pflanzenkohle und/oder Biokohle, vorzugsweise aus aktivierter Kohle bzw. aus Pflanzenkohle, wobei die Kohle vorzugsweise gemahlen ist, und/oder wobei die Korngröße der Kohle ≤ 150 µm, ≤ 200 µm, ≤ 250 µm oder ≤ 300 µm, insbesondere ≤ 200 µm ist, oder 30 µm - 200 µm, 40 µm - 200 µm, 30 µm - 180 µm oder 50 µm - 150 µm, oder 80 µm - 120 µm ist.

In einer bevorzugten Ausführungsform der erfindungsgemäßen Saatguteinheit (1) besteht die Kohle in der Schicht (3) zu mindestens 60 Gew.-%, zu mindestens 70 Gew.-%, zu mindestens 95 Gew.-%, oder zu mindestens 99 Gew.-% aus Pflanzenkohle, wobei die Pflanzenkohle vorzugsweise gemahlen ist, und/oder wobei die Korngröße der Pflanzenkohle ≤ 200 µm, 30 µm - 200 µm, 40 µm - 200 µm, 30 µm - 180 µm, oder 50 µm - 150 µm, oder 80 µm - 120 µm ist.

In einer bevorzugten Ausführungsform der erfindungsgemäßen Saatguteinheit (1) ist der Kleber biologischen Ursprungs (4) ein proteinhaltiger Kleber, vorzugsweise ein Kleber auf Glutin-Basis, ein Kleber auf Fibrin-Basis, oder ein Kleber auf Basis der Aminosäure DPPA, oder ein Fischleim, besonders bevorzugt ein Fischleim aus Kaltwasserfisch, wobei der Kleber biologischen Ursprungs Zuschlagsstoffe wie Gummi arabicum oder Proteinhydrolysat enthalten kann.

In einer bevorzugten Ausführungsform der erfindungsgemäßen Saatguteinheit (1)
- schließt die Schicht (3) den Samen (2) vollständig) ein; und/oder
- sind der Superabsorber (5) und die gegebenenfalls weiteren Hilfsstoffe in der Schicht (3) - insbesondere als Partikel - eingebettet, und/oder
- ist der Kleber biologischen Ursprungs (4) in der Schicht (3) und insbesondere in der Kohle, annähernd gleichmäßig oder homogen verteilt, und/oder
- schließt gegebenenfalls die Hülle (9) die Schicht (3) vollständig ein.

In einer bevorzugten Ausführungsform der erfindungsgemäßen Saatguteinheit (1) sind die gegebenenfalls weiteren Hilfsstoffe ausgewählt aus:
- Nährstoffen oder Nährstoffelementen (6);
- Repellent- und/oder Fraßhemmer-Elementen (7); und/oder
- Stärkungsmitteln oder Stärkungsmittel-Elementen (8).

In einer bevorzugten Ausführungsform der erfindungsgemäßen Saatguteinheit (1)
- dient der polymere Superabsorber (5) als Wasserspeicher- und Sprengmittel-Element, und/oder
- ist der polymere Superabsorber (5) fest bzw. kristallin oder fest und kristallin, und/oder
- ist der polymere Superabsorber (5) vermahlen und/oder
- weist der polymere Superabsorber (5) eine Korngröße von 50 µm - 400 µm, von 100 µm - 350 µm oder von 150 µm - 300 µm oder von 175 µm - 225 µm.

In einer bevorzugten Ausführungsform der erfindungsgemäßen Saatguteinheit (1) ist der polymere Superabsorber (5) ein Polyacrylamid oder eine vernetzte Arylamid/Acrylsäure, ein Polyacrylat, ein Acrylamid/Acrylsäure-Copolymer (gegebenenfalls quervernetzt) oder Mischungen davon, vorzugsweise Natriumpolyacrylat oder Kaliumpolyacrylat oder Acrylamid/Acrylsäure-Copolymer Kalium- oder Natriumsalz oder ein quervernetztes Acrylamid/Acrylsäure-Copolymer Kalium- oder Natriumsalz, eine vernetzte Arylamid/Acrylsäure in Form eines Kalium- oder Natriumsalzes oder Mischungen davon, insbesondere vorzugsweise Kaliumpolyacrylat oder Acrylamid/Acrylsäure-Copolymer Kaliumsalz oder ein quervernetztes Acrylamid/Acrylsäure-Copolymer Kaliumsalz oder eine vernetzte Arylamid/Acrylsäure in Form eines Kaliumsalzes (beispielsweise Stockosorb^{®}) oder Mischungen davon. Alternativ ist der "polymere Sperabsorber" ein biologischer polymerer Superabsorber ist, ausgewählt aus einem Cellulose- oder Lignin-basierten Hydrogel oder einem Naturkautschuk-Derivat, vorzugsweise ausgewählt aus einem Cellulose- oder Lignin-basierten Hydrogel. Ein besonders bevozugtes Beispiele sind Polyter GT oder Agrobiogel. Insgesamt zeichnet sich der polymere Superabsorber (5) dadurch aus, dass er
- als Wasserspeicher- und Sprengmittel-Element dient, und/oder
- fest bzw. kristallin oder fest und kristallin ist, und/oder
- vermahlen ist und/oder
- eine Korngröße von 50 µm- 400 µm oder von 100 µm - 350 µm oder von 150 µm - 300 µm oder von 175 µm - 225 µm aufweist.

Der polymere Superabsorber (5) kann sich auch dadurch auszeichnen, dass er eine Korngröße von 50 µm - 200 µm, oder von 50 µm - 150 µm oder von 80 µm - 120 µm aufweist.

In einer bevorzugten Ausführungsform der erfindungsgemäßen Saatguteinheit (1) der polymere Superabsorber (5) ein Polyacrylamid, eine vernetzte Arylamid/Acrylsäure, ein Polyacrylat oder ein Acrylamid/Acrylsäure-Copolymer ist, insbesondere ein Natriumpolyacrylat oder Kaliumpolyacrylat oder Acrylamid/Acrylsäure-Copolymer Kalium- oder Natriumsalz oder ein quervernetztes Acrylamid/Acrylsäure-Copolymer Kalium- oder Natriumsalz, eine vernetzte Arylamid/Acrylsäure in Form eines Kalium- oder Natriumsalzes oder Mischungen davon ist, insbesondere vorzugsweise Kaliumpolyacrylat oder Acrylamid/Acrylsäure-Copolymer Kaliumsalz oder ein quervernetztes Acrylamid/Acrylsäure-Copolymer Kaliumsalz oder eine vernetzte Arylamid/Acrylsäure in Form eines Kaliumsalzes oder Mischungen davon ist, wobei der polymere Superabsorber (5)
- als Wasserspeicher- und Sprengmittel-Element dient, und/oder
- fest bzw. kristallin oder fest und kristallin ist, und/oder
- vermahlen ist und/oder
- eine Korngröße von 50 µm - 400 µm, oder von 100 µm - 350 µm oder von 150 µm - 300 µm oder von 175 µm - 225 µm aufweist, oder eine Korngröße von 50 µm - 200 µm, oder von 50 µm - 150 µm oder von 80 µm - 120 µm aufweist.

Vorzugssweise ist in einer dieser beiden, direkt vorangehenden bevorzugten Ausführungsformen der polymere Superabsorber körnig oder kornförmig oder in Form eines Kornes, bzw. ist fest und kristallin und der polymere Superabsorber in dieser Form weist entsprechend die oben angegebene Korngröße auf.

In einer bevorzugten Ausführungsform der erfindungsgemäßen Saatguteinheit (1) ist ein weiterer Hilfsstoff Nährstoffe oder Nährstoffelemente (6), die von der Saatguteinheit (1) umfasst sind und vorzugsweise in der Schicht (3) eingebettet sind, wobei die Nährstoffe oder Nährstoffelemente (6) vorzugsweise Makro- und Mikronährstoffe und/oder Nährstoffe oder Nährstoffelemente (6) auf organischer Basis sind, wobei diese vorzugsweise Düngemittel auf Proteinbasis sind, vorzugsweise Vinasse/Schlempe oder Proteinhydrolysate.

In einer bevorzugten Ausführungsform der erfindungsgemäßen Saatguteinheit (1) ist ein weiterer Hilfsstoff Repellent- und/oder Fraßhemmer-Elemente (7), die von der Saatguteinheit (1) umfasst sind und vorzugsweise in der Schicht (3) eingebettet sind, wobei die Repellent- und/oder Fraßhemmer-Elemente (7) vorzugsweise auf Pflanzen- und/oder Aromen-Extrakt-Basis, gegebenenfalls ätherischer Pflanzen- und/oder Aromen-Extrakt-Basis beruhen, insbesondere Extrakte aus Cayennepfeffer, Neembaum Ingwer, Oregano, Geranien, Zistosenkraut oder Thymian umfassen.

In einer bevorzugten Ausführungsform der erfindungsgemäßen Saatguteinheit (1) ist ein weiterer Hilfsstoff Stärkungsmittel oder Stärkungsmittel-Elemente (8), die von der Saatguteinheit (1) umfasst sind und vorzugsweise in der Schicht (3) eingebettet sind, wobei die Stärkungsmittel-Elemente (8) vorzugsweise organische Düngemittel umfassen, vorzugsweise ein aus Pechnelke und Lupine gewonnener stärkender Wirkstoff ist.

In einer bevorzugten Ausführungsform der erfindungsgemäßen Saatguteinheit (1) umfasst die Saatguteinheit (1) auch eine Hülle (9), wobei die Hülle (9) vorzugsweise die Schicht (3) vollständig einschließt, wobei die Hülle (9) vorzugsweise aus Gelatine, Cellulose, Carrageen, Stärke oder Leim besteht.

In einer bevorzugten Ausführungsform der erfindungsgemäßen Saatguteinheit (1) ist der Samen (2) ein kleinkörniger Samen (2) ist, insbesondere ein Samen (2) einer Größe < 3,5 mm, vorzugsweise der Samen (2) ausgewählt ist aus Saaten für Möhren, Salate, Tomaten, Zuckerrüben, Futterrüben, Raps, Leindotter, Lein, Kohlgemüse, Rote Beete, Rettich, Pastinake, Sellerie, Petersilie, Schnittlauch, oder Heilkräuter wie Baldrian, Thymian, Oregano, Spitzwegerich, Sonnenhut.

In einer bevorzugten Ausführungsform der erfindungsgemäßen Saatguteinheit (1)
- besteht die Schicht (3) zu 5 - 30 Gew.-% oder zu 10 - 20 Gew.-% aus dem polymeren Superabsorber (5);
   vorzugsweise
- besteht die Schicht (3) zu 1 - 15 Gew.-% aus dem Kleber biologischen Ursprungs (4);
- besteht die Schicht (3) zu 5 - 30 (vorzugsweise zu 10 - 20) Gew.-% aus dem polymeren Superabsorber (5), und
- besteht die Schicht (3) zu 55 - 94 Gew.-% aus Kohle;
   insbesondere
- besteht die Schicht (3) zu 1 - 15 Gew.-% aus dem Kleber biologischen Ursprungs (4);
- besteht die Schicht (3) zu 5 - 30 (vorzugsweise zu 10 - 20) Gew.-% aus dem polymeren Superabsorber (5), und/oder
- besteht die Schicht (3) bei deren optionaler Zugabe zu 1 - 20 (vorzugsweise zu 5 - 15) Gew.-% aus Nährstoffen oder Nährstoffelementen (6),
- besteht die Schicht (3) bei deren optionaler Zugabe zu 1 - 10 Gew.-% aus Repellent- und/oder Fraßhemmer-Elementen (7),
- besteht die Schicht (3) bei deren optionaler Zugabe zu 0.001 - 1 Gew.-% aus Stärkungsmitteln oder Stärkungsmittel-Elementen (8),
- besteht der Rest der Schicht (3) aus Kohle.
herum pilliert, bzw. pelletiert wird.

In einer bevorzugten Ausführungsform der erfindungsgemäßen Saatguteinheit (1) beträgt das Verhältnis des Durchmessers der Saatguteinheit (1) zum Durchmesser der Materialien der Schicht (3), insbesondere der Kohle and des polymeren Superabsorbers (5), von 650:1 bis 10:1, oder von 500:1 bis 20:1, oder von 400:1 bis 30:1, von 300:1 bis 40:1, oder von 200:1 bis 50:1. Dabei sind insbesondere der Durchmesser der Materialien der Schicht (3) , insbesondere der Kohle and des polymeren Superabsorbers (5), als synonym zu deren Korngröße anzusehen.

In einer bevorzugten Ausführungsform der erfindungsgemäßen Saatguteinheit (1) enthält die Schicht (3) kein Guar und kein Guar-Derivat.

In einer bevorzugten Ausführungsform der erfindungsgemäßen Saatguteinheit (1)
- nimmt die Saatguteinheit (1) die Form eines Pellets odereiner Pille ein, wobei vorzugsweise die Schicht (3) den Samen (2) vollständig umhüllt und/oder die Schicht (3) und der Samen (2), gegebenenfalls mit der die Schicht (3) umgebenden Hülle (9) das Pellet/die Pille sind/bilden;
- wurde der Samen (2) einem Pelletierungs-Vorgang oder einem Pillierungs-Vorgang mit der Masse, aus der die Schicht (3) besteht, unterworfen, so dass vorzugsweise die Schicht (3) und der Samen (2), gegebenenfalls mit der die Schicht (3) umgebenden Hülle (9) das Pellet oder die Pille bilden.

In einer bevorzugten Ausführungsform der erfindungsgemäßen Saatguteinheit (1) enthält die Saatguteinheit (1) genau einen Samen.

In einer bevorzugten Ausführungsform der erfindungsgemäßen Saatguteinheit (1) Ausführungsformen besteht die Saatguteinheit (1) aus mindestens (insbesondere genau) einem Samen (2), einer Schicht (3), einem polymeren Superabsorber (5) und einem Kleber biologischen Ursprungs (4), sowie gegebenenfalls einer Hülle (9) und weiteren Hilfsstoffen ((6), (7) und (8)).

Wie oben gesagt ist ein weiterer Gegenstand der vorliegenden Offenlegungsschrift ein Verfahren zur Herstellung einer erfindungsgemäßen Saatguteinheit (1) mit den folgenden Schritten:
**SCHRITT I:**
   - Vorlegen der Kohle in gemahlener Form als Bestandteil der Schicht (3)
      - Mischung mit einem polymeren Superabsorber (5);
      - gegebenenfalls Mischung mit Nährstoffen oder Nährstoffelementen (6) und/oder
      - gegebenenfalls Mischung mit Stärkungsmitteln oder Stärkungsmittel-Elementen (8),
      - wobei die optionale Mischung vor Überführung in ein Mischaggregat (A) oder in dem Mischaggregat (A), stattfindet
   - Vermahlung in einer Mahlapparatur (B);
optionaler **SCHRITT II:**
   gegebenenfalls Zugabe mindestens einer Art von Repellent- und/oder Fraßhemmer-Elementen (7), vorzugsweise mehrerer verschiedener zuvor in einem Mischaggregat (C) gemischter Arten von Repellent- und/oder Fraßhemmer-Elementen (7),
   zu der gemahlenen Mischung aus Stufe I in einem Mischaggregat (D);
**SCHRITT III:**
   Zugabe des Samens (2) und des Klebers biologischen Ursprungs (3), wobei diese gegebenenfalls vor der Zugabe gemischt werden, zu der Mischung aus Stufe II in einer Pillieranlage (E) wobei der Samen (2) den Kern bildet, um den herum pilliert, bzw. pelletiert wird.

Wie oben gesagt ist ein weiterer Gegenstand der vorliegenden Offenlegungsschrift eine Saatguteinheit (1) umhüllt von einer Schicht aus Pflanzenkohle, herstellbar durch ein Verfahren umfassend die folgenden Schritte
**SCHRITT I:**
   Vorlegen der Pflanzenkohle in gemahlener Form als Bestandteil der Schicht (3), Mischung mit einen polymeren Superabsorber (5), enthaltend ≥50 Gew.-% Polyacrylat;
   gegebenenfalls Mischung mit Nährstoffen oder Nährstoffelementen (6) und/oder gegebenenfalls Mischung mit Stärkungsmitteln oder Stärkungsmittel-Elementen (8),
   wobei die optionale Mischung vor Überführung in ein Mischaggregat (A) oder in dem Mischaggregat (A), stattfindet
   Vermahlung in einer Mahlapparatur (B);
optionaler **SCHRITT II:**
   Gegebenenfalls Zugabe mindestens einer Art von Repellent- und/oder Fraßhemmer-Elementen (7), vorzugsweise mehrerer verschiedener zuvor in einem Mischaggregat (C) gemischter Arten von Repellent- und/oder Fraßhemmer-Elementen (7),
   zu der gemahlenen Mischung aus Stufe I in einem Mischaggregat (D);
**SCHRITT III:**
   Zugabe des Samens (2) und des Klebers biologischen Ursprungs (3), wobei diese gegebenenfalls vor der Zugabe gemischt werden, zu der Mischung aus Stufe II in einer Pillieranlage (E) wobei der Samen (2) den Kern bildet, um den herum pilliert, bzw. pelletiert wird.

### BEISPIELE

**Fig. 2**) zeigt die Ergebnisse der Pelletierungen verschiedener Samen, nämlich Baldriansamen (**A**) und Himbeersamen (**B**), nach dem Verfahren (s. auch **Fig. 3**), so dass erfindungsgemäße Saatguteinheiten in Form von Pellets entstanden (**C**) bzw. (**D**).

### BEZUGSZEICHENLISTE FÜR ABBILDUNG Fig. 3)

- (1): Saatguteinheit
- (2): Samen
- (3): Schicht (Kohle)
- (4): Kleber biologischen Ursprungs
- (5): polymerer Superabsorber
- (6): Nährstoff
- (7): Repellent und Fraßhemmer-Element
- (8): Stärkungsmittel
- (A): Mischaggregat
- (B): Mahlapparatur
- (C): Mischaggregat
- (D): Mischaggregat
- (E): Pillieranlage

Optional stehen die folgenden Buchstaben für die folgende Information:
(a) Pflanzenkohle 70% m/m + Kalium-Polyacrylat 19,998% m/m
(b) Org. Düngemittel 10% m/m
(c) Pflanzen-Stärkungs-Mittel 0,002% m/m
(d) Neemöl 15% m/m
(e) Cayennepfefferextrakt 4% m/m
(f) Ätherisches Thymianöl 1% m/m
(g) Saatgut
(h) Pillierhilfsstoff (Bindemittel)
(j) Mischaggregat
(k) Vermahlung
(m) Pillieranlage.

## Patentansprüche

1. Saatguteinheit (1) in Form eines Pellets umfassend mindestens einen Samen (2) und eine Schicht (3), umfassend Kohle, einen polymeren Superabsorber (5) und einen Kleber biologischen Ursprungs (4); wobei die Schicht (3) den Samen (2) mindestens teilweise einschließt, wobei der polymere Superabsorber (5) ausgewählt ist
a. auseinem Polyacrylamid, einer vernetzten Arylamid/Acrylsäure, einem Polyacrylat oder einem Acrylamid/Acrylsäure-Copolymer ist; oder
b. einem biologischen polymeren Superabsorber ausgewählt aus einem Cellulose- oder Lignin-basierten Hydrogel oder einem Naturkautschuk-Derivat,
- die Schicht (3) zu mindestens 50 Gew.-% aus der Kohle besteht,
- der polymere Superabsorber (5) eine Korngröße von 50 µm - 400 µm aufweist; und
- der polymere Superabsorber (5) in der Schicht (3) als Partikel eingebettet ist.

2. Saatguteinheit (1) nach Anspruch 1, **dadurch gekennzeichnet,**
- **dass** die Kohle ausgewählt ist aus aktivierter Kohle, Biokohle oder Pflanzenkohle.

3. Saatguteinheit (1) nach einem der Ansprüche 1 oder 2, **dadurch gekennzeichnet, dass**
- der polymere Superabsorber (5) ein Polyacrylamid, eine vernetzte Arylamid/Acrylsäure, ein Polyacrylat oder ein Acrylamid/Acrylsäure-Copolymer ist.

4. Saatguteinheit (1) nach einem der Ansprüche 1 bis 3, **dadurch gekennzeichnet, dass** die Schicht (3)
- zu mindestens 60 Gew.-%, zu mindestens 70 Gew.-%, zu mindestens 95 Gew.-%, oder zu mindestens 99 Gew.-% aus Pflanzenkohle besteht, wobei die Pflanzenkohle vorzugsweise gemahlen ist, und/oder wobei die Korngröße der Pflanzenkohle ≤ 200 µm, 30 µm - 200 µm, oder 40 µm - 200 µm, oder 30 µm - 180 µm, oder 50 µm - 150 µm, oder 80 µm - 120 µm ist.

5. Saatguteinheit (1) nach einem der Ansprüche 1 bis 4, **dadurch gekennzeichnet, dass** der Kleber biologischen Ursprungs (4) ein proteinhaltiger Kleber ist, vorzugsweise ein Kleber auf Glutin-Basis, ein Kleber auf Fibrin-Basis, oder ein Kleber auf Basis der Aminosäure DPPA, oder ein Fischleim ist, besonders bevorzugt ein Fischleim aus Kaltwasserfisch, wobei der Kleber biologischen Ursprungs Zuschlagsstoffe wie Gummi arabicum oder Proteinhydrolysat enthalten kann.

6. Saatguteinheit (1) nach einem der Ansprüche 1 bis 5, **dadurch gekennzeichnet, dass** die die Saatguteinheit weitere Hilfsstoffe enthält, wobei diese weiteren Hilfsstoffe ausgewählt sind aus:
- Nährstoffen oder Nährstoffelementen (6);
- Repellent- und/oder Fraßhemmer-Elementen (7); und/oder
- Stärkungsmitteln oder Stärkungsmittel-Elementen (8).

7. Saatguteinheit (1) nach einem der Ansprüche 1 bis 6,
a) **dadurch gekennzeichnet, dass** der polymere Superabsorber (5) körnig ist und ein Polyacrylamid, eine vernetzte Arylamid/Acrylsäure, ein Polyacrylat oder ein Acrylamid/Acrylsäure-Copolymer ist, insbesondere ein Natriumpolyacrylat oder Kaliumpolyacrylat oder Acrylamid/Acrylsäure-Copolymer Kalium- oder Natriumsalz oder ein quervernetztes Acrylamid/Acrylsäure-Copolymer Kalium- oder Natriumsalz, eine vernetzte Arylamid/Acrylsäure in Form eines Kalium- oder Natriumsalzes oder Mischungen davon ist, insbesondere vorzugsweise Kaliumpolyacrylat oder Acrylamid/Acrylsäure-Copolymer Kaliumsalz oder ein quervernetztes Acrylamid/Acrylsäure-Copolymer Kaliumsalz oder eine vernetzte Arylamid/Acrylsäure in Form eines Kaliumsalzes oder Mischungen davon ist, wobei der polymere Superabsorber (5)
- als Wasserspeicher- und Sprengmittel-Element dient, und/oder
- fest bzw. kristallin oder fest und kristallin ist, und/oder
- vermahlen ist und/oder
- eine Korngröße von 100 µm - 350 µm oder von 150 µm - 300 µm oder von 175 µm - 225 µm aufweist, oder eine Korngröße von 50 µm - 200 µm, oder von 50 µm - 150 µm oder von 80 µm - 120 µm aufweist;
oder
b) **dadurch gekennzeichnet, dass** der polymere Superabsorber (5) ein biologischer polymerer Superabsorber ist, ausgewählt aus einem Cellulose- oder Lignin-basierten Hydrogel oder einem Naturkautschuk-Derivat, vorzugsweise ausgewählt aus einem Cellulose- oder Lignin-basierten Hydrogel, insbesondere ausgewählt ist aus Polyter GT oder Agrobiogel.

8. Saatguteinheit (1) nach Anspruch 6, **dadurch gekennzeichnet, dass** als ein weiterer Hilfsstoff Nährstoffe oder Nährstoffelemente (6) von der Saatguteinheit (1) umfasst sind und vorzugsweise in der Schicht (3) eingebettet sind, wobei die Nährstoffe oder Nährstoffelemente (6) vorzugsweise Makro- und Mikronährstoffe und/oder Nährstoffe oder Nährstoffelemente (6) auf organischer Basis sind, wobei diese vorzugsweise Düngemittel auf Proteinbasis sind, vorzugsweise Vinasse/Schlempe oder Proteinhydrolysate.

9. Saatguteinheit (1) nach Anspruch 6, **dadurch gekennzeichnet, dass** als ein weiterer Hilfsstoff Repellent- und/oder Fraßhemmer-Elemente (7) von der Saatguteinheit (1) umfasst sind und vorzugsweise in der Schicht (3) eingebettet sind, wobei die Repellent- und/oder Fraßhemmer-Elemente (7) vorzugsweise auf Pflanzen- und/oder Aromen-Extrakt-Basis, gegebenenfalls ätherischer Pflanzen- und/oder Aromen-Extrakt-Basis beruhen, insbesondere Extrakte aus Cayennepfeffer, Neembaum Ingwer, Oregano, Geranien, Zistosenkraut oder Thymian umfassen.

10. Saatguteinheit (1) nach Anspruch 6, **dadurch gekennzeichnet, dass** als ein weiterer Hilfsstoff Stärkungsmittel oder Stärkungsmittel-Elemente (8) von der Saatguteinheit (1) umfasst sind und vorzugsweise in der Schicht (3) eingebettet sind, wobei die Stärkungsmittel-Elemente (8) vorzugsweise organische Düngemittel umfassen, vorzugsweise ein aus Pechnelke und Lupine gewonnener stärkender Wirkstoff ist; und/oder
**dadurch gekennzeichnet, dass** der Samen (2) ein kleinkörniger Samen (2) ist, insbesondere ein Samen (2) einer Größe <3,5 mm, vorzugsweise der Samen (2) ausgewählt ist aus Saaten für
Möhren, Salate, Tomaten, Zuckerrüben, Futterrüben, Raps, Leindotter, Lein, Kohlgemüse, Rote Beete, Rettich, Pastinake, Sellerie, Petersilie, Schnittlauch, oder Heilkräuter wie Baldrian, Thymian, Oregano, Spitzwegerich, Sonnenhut.

11. Saatguteinheit (1) nach einem der Ansprüche 1 bis 10, **dadurch gekennzeichnet, dass**
- die Schicht (3) zu 5 - 30 Gew.-% oder zu 10 - 20 Gew.-% aus dem polymeren Superabsorber (5) besteht;
vorzugsweise
- die Schicht (3) zu 1 - 15 Gew.-% aus dem Kleber biologischen Ursprungs besteht;
- die Schicht (3) zu 5 - 30 Gew.-% aus dem polymeren Superabsorber (5) besteht, und
- die Schicht (3) zu 55 - 94 Gew.-% aus Kohle besteht;
insbesondere
- die Schicht (3) zu 1 - 15 Gew.-% aus dem Kleber biologischen Ursprungs besteht;
- die Schicht (3) zu 5 - 30 Gew.-% aus dem polymeren Superabsorber (5) besteht, und/oder
- die Schicht (3) bei deren optionaler Zugabe zu 1 - 20 Gew.-% aus Nährstoffen oder Nährstoffelementen (6) besteht,
- die Schicht (3) bei deren optionaler Zugabe zu 1 - 10 Gew.-% aus Repellent- und/oder Fraßhemmer-Elementen (7) besteht,
- die Schicht (3) bei deren optionaler Zugabe zu 0.001 - 1 Gew.-% aus Stärkungsmitteln oder Stärkungsmittel-Elementen (8) besteht,
- der Rest der Schicht (3) aus Kohle besteht.

12. Saatguteinheit (1) nach einem der Ansprüche 1 bis 11, **dadurch gekennzeichnet, dass** das Verhältnis des Durchmessers der Saatguteinheit (1) zum Durchmesser der Materialien der Schicht (3), insbesondere der Kohle and des polymeren Superabsorbers (5), von 650:1 bis 10:1, oder von 500:1 bis 20:1, oder von 400:1 bis 30:1, von 300:1 bis 40:1, oder von 200:1 bis 50:1.

## Claims

1. Seed unit (1) in the form of a pellet comprising at least one seed (2) and a layer (3) comprising coal, a polymeric superabsorbent (5) and an adhesive of biological origin (4), the layer (3) at least partially enclosing the seed (2), **characterized in that** the polymeric superabsorbent (5) is selected from
a. a polyacrylamide, a crosslinked arylamide/acrylic acid, a polyacrylate or an acrylamide/acrylic acid copolymer, or
b. a biological polymeric superabsorbent selected from a cellulose- or lignin-based hydrogel or a natural rubber derivative;
- the layer (3) consists of at least 50% by weight of coal,
- the polymeric superabsorbent (5) has a grain size of 50 µm - 400 µm; and
- the polymeric superabsorbent (5) is embedded in the layer (3) as a particle.

2. Seed unit (1) according to claim 1, **characterized in that**
- the coal is selected from activated carbon, biologigal coal or biochar.

3. Seed unit (1) according to one of claims 1 or 2, **characterized in that**
- the polymeric superabsorbent (5) is a polyacrylamide, a crosslinked arylamide/acrylic acid, a polyacrylate or an acrylamide/acrylic acid copolymer.

4. Seed unit (1) according to one of claims 1 to 3, **characterized in that** the layer (3)
- consists of at least 60% by weight, at least 70% by weight, at least 95% by weight, or at least 99% by weight of biochar, the biochar preferably being ground, and/or wherein the grain size of the biochar is ≤ 200 µm, 30 µm - 200 µm, or 40 µm - 200 µm, or 30 µm - 180 µm, or 50 µm - 150 µm, or 80 µm - 120 µm.

5. Seed unit (1) according to one of claims 1 to 4, **characterized in that** the adhesive of biological origin (4) is a protein-containing adhesive, preferably a glutin-based adhesive, a fibrin-based adhesive, or an adhesive based on the amino acid DPPA, or fish glue, particularly preferably fish glue from cold water fish, wherein the glue of biological origin can contain additives such as gum arabic or protein hydrolyzate.

6. Seed unit (1) according to one of claims 1 to 5, **characterized in that** the seed unit comprises further auxiliary materials, wherein these further auxiliary substances are selected from:
- nutrients or nutrient elements (6);
- repellent- and/or anti-feeding-elements; and/or
- strengthening agents or strengthening elements (8).

7. Seed unit (1) according to one of claims 1 to 6,
a) **characterized in that** the polymeric superabsorbent (5) is granular and is a polyacrylamide, a crosslinked arylamide/acrylic acid, a polyacrylate or an acrylamide/acrylic acid copolymer; in particular is a sodium polyacrylate or potassium polyacrylate or acrylamide/acrylic acid copolymer potassium or sodium salt or a cross-linked acrylamide/acrylic acid copolymer potassium or sodium salt, a cross-linked arylamide/acrylic acid in the form of a potassium or sodium salt or mixtures thereof; particularly preferably is potassium polyacrylate or acrylamide/acrylic acid copolymer potassium salt or a cross-linked acrylamide/acrylic acid copolymer potassium salt or a crosslinked arylamide/acrylic acid in the form of a potassium salt or mixtures thereof, the polymeric superabsorbent (5)
- serves as a water storage and disintegrating element, and/or
- is solid or crystalline or solid and crystalline, and/or
- is ground and/or
- has a grain size of 100 µm - 350 µm, or 150 µm - 300 µm, or 175 µm - 225 µm, or a grain size of 50 µm - 200 µm, or of 50 µm - 150 µm or from 80 µm - 120 µm;
or
b) **characterized in that** the polymeric superabsorbent (5) is a biological polymeric superabsorbent, selected from a cellulose or lignin-based hydrogel or a natural rubber derivative, preferably selected from a cellulose or lignin-based hydrogel, in particular selected from Polyter GT or Agrobiogel.

8. Seed unit (1) according to claim 6, **characterized in that** nutrients or nutrient elements (6) are included in the seed unit (1) as a further auxiliary substance and are preferably embedded in the layer (3), wherein the nutrients or nutrient elements (6) are preferably macro- and micronutrients and/or nutrients or nutrient elements (6) on an organic basis, wherein these preferably being protein-based fertilizers, preferably vinasse/stillage or protein hydrolysates.

9. Seed unit (1) according to claim 6, **characterized in that** as a further auxiliary agent repellent- and/or anti-feeding-elements (7) are included in the seed unit (1) and are preferably embedded in the layer (3); wherein the repellent- and/or anti-feeding-elements (7) are preferably based on plant and/or aromatic extracts, optionally based on ethereal plant and/or aromatic extracts, in particular including extracts of cayenne pepper, neem tree ginger, oregano, geraniums, cistus or thyme.

10. Seed unit (1) according to 6, **characterized in that** strengthening agent or strengthening elements (8) are included in the seed unit (1) as a further auxiliary substance and are preferably embedded in the layer (3), whereby the strengthening elements (8) preferably comprise organic fertilizers, preferably a strengthening agent obtained from pitch clove and lupine;
and/or
**characterized in that** the seed (2) is a small-grain seed (2), in particular a seed (2) with a size of <3.5 mm, preferably the seed (2) is selected from seeds for carrots, salads, tomatoes, sugar beet, fodder beet, rapeseed, camelina, flax, cabbage, beetroot, radish, parsnip, celery, parsley, chives, or medicinal herbs such as valerian, thyme, oregano, ribwort plantain, coneflower.

11. Seed unit (1) according to one of claims 1 to 10, **characterized in that**
- the layer (3) consists of 5 - 30% by weight or 10 - 20% by weight of the polymeric superabsorbent (5);
preferably
- the layer (3) consists of 1-15% by weight of the adhesive of biological origin;
- the layer (3) consists of 5 - 30% by weight of the polymeric superabsorbent (5), and
- the layer (3) consists of 55 - 94% by weight of coal;
in particular
- the layer (3) consists of 1-15% by weight of the adhesive of biological origin;
- the layer (3) consists of 5 - 30% by weight of the polymeric superabsorbent (5), and/or
- the layer (3) consists of 1-20% by weight of nutrients or nutrient elements (6) when optionally added,
- the layer (3) consists of 1 - 10% by weight of repellent and/or anti-feeding elements (7) when optionally added,
- the layer (3) consists of 0.001 - 1% by weight of strengthening agents or strengthening elements (8) when optionally added,
the rest of the layer (3) consists of coal.

12. Seed unit (1) according to one of claims 1 to 11, **characterized in that** the ratio of the diameter of the seed unit (1) to the diameter of the materials of the layer (3), in particular the coal and the polymeric superabsorbent (5), is from 650:1 to 10:1, or from 500:1 to 20:1, or from 400:1 to 30:1, from 300:1 to 40:1, or from 200:1 to 50:1.

## Revendications

1. Unité d'ensemencement (1) sous la forme d'un granulé comprenant au moins une semence (2) et une couche (3), comprenant du charbon, un superabsorbant polymérique (5) et une colle d'origine biologique (4) ; dans laquelle la couche (3) comprend au moins partiellement la semence (2), dans laquelle le superabsorbant polymérique (5) est choisi parmi
a. un polyacrylamide, un arylamide/acide acrylique réticulé, un polyacrylate ou un copolymère d'acrylamide/acide acrylique ; ou
b. un superabsorbant polymérique biologique choisi parmi un hydrogel à base de cellulose ou de lignine ou un dérivé de caoutchouc naturel,
- la couche (3) étant constituée à au moins 50 % en poids du charbon,
- le superabsorbant polymérique (5) présentant une granulométrie de 50 µm à 400 µm ; et
- le superabsorbant polymérique (5) étant incorporé dans la couche (3) sous forme de particules.

2. Unité d'ensemencement (1) selon la revendication 1, **caractérisée en ce que**
- le charbon est choisi parmi le charbon activé, le biocharbon ou le charbon végétal.

3. Unité d'ensemencement (1) selon l'une des revendications 1 ou 2, **caractérisée en ce que**
- le superabsorbant polymérique (5) est un polyacrylamide, un arylamide/acide acrylique réticulé, un polyacrylate ou un copolymère d'acrylamide/acide acrylique.

4. Unité d'ensemencement (1) selon l'une des revendications 1 à 3, **caractérisée en ce que** la couche (3)
- est constituée à au moins 60 % en poids, au moins 70 % en poids, au moins 95 % en poids, ou au moins 99 % en poids de charbon végétal, dans laquelle le charbon végétal est de préférence broyé, et/ou dans laquelle la granulométrie du charbon végétal est ≤ 200 µm, de 30 µm à 200 µm, ou de 40 à 200 µm, ou de 30 µm à 180 µm, ou de 50 µm à 150 µm, ou de 80 µm à 120 µm.

5. Unité d'ensemencement (1) selon l'une des revendications 1 à 4, **caractérisée en ce que** la colle d'origine biologique (4) est une colle contenant des protéines, de préférence une colle à base de glutine, une colle à base de fibrine, ou une colle à base de l'acide aminé DPPA, ou une ichtyocolle, de manière particulièrement préférée une ichtyocolle de poisson d'eaux froides, la colle d'origine biologique pouvant contenir des additifs tels que la gomme arabique ou un hydrolysat de protéine.

6. Unité d'ensemencement (1) selon l'une des revendications 1 à 5, **caractérisée en ce que** l'unité d'ensemencement contient d'autres auxiliaires, ces autres auxiliaires étant choisis parmi :
- des substances nutritives ou des éléments nutritifs (6) ;
- des éléments répulsifs et/ou anti-limaces (7) ; et/ou
- des agents fortifiants ou des éléments d'agents fortifiants (8).

7. Unité d'ensemencement (1) selon l'une des revendications 1 à 6,
a) **caractérisée en ce que** le superabsorbant polymérique (5) est granuleux et est un polyacrylamide, un arylamide/acide acrylique réticulé, un polyacrylate ou un copolymère d'acrylamide/acide acrylique, en particulier un polyacrylate de sodium ou un polyacrylate de potassium ou un sel de potassium ou de sodium de copolymère d'acrylamide/acide acrylique, ou un sel de potassium ou de sodium de copolymère d'acrylamide/acide acrylique à réticulation croisée, un arylamide/acide acrylique réticulé sous la forme d'un sel de potassium ou de sodium ou des mélanges de ceux-ci, en particulier de préférence un polyacrylate de potassium ou un sel de potassium de copolymère d'acrylamide/acide acrylique, ou un sel de potassium de copolymère d'acrylamide/acide acrylique à réticulation croisée ou un arylamide/acide acrylique réticulé sous la forme d'un sel de potassium ou des mélanges de ceux-ci, le superabsorbant polymérique (5)
- servant d'élément piégeur d'eau et de désintégration, et/ou
- étant solide et/ou cristallin ou solide et cristallin, et/ou
- étant broyé et/ou
- présentant une granulométrie de 100 µm à 350 µm ou de 150 µm à 300 µm ou de 175 µm à 225 µm, ou une granulométrie de 50 µm à 200 µm, ou
de 50 µm à 150 µm ou de 80 µm à 120 µm ;
ou
b) **caractérisée en ce que** le superabsorbant polymérique (5) est un superabsorbant polymérique biologique, choisi parmi un hydrogel à base de cellulose ou de lignine, ou un dérivé de caoutchouc naturel, de préférence choisi parmi un hydrogel à base de cellulose ou de lignine, choisi en particulier parmi Polyter GT ou Agrobiogel.

8. Unité d'ensemencement (1) selon la revendication 6, **caractérisée en ce que** l'unité d'ensemencement (1) comprend des substances nutritives ou des éléments nutritifs (6) en tant qu'autres auxiliaires, qui sont de préférence incorporés dans la couche (3), les substances nutritives ou les éléments nutritifs (6) étant de préférence des macro- et micronutriments et/ou des substances nutritives ou des éléments nutritifs (6) à base organique, ceux-ci étant de préférence des engrais à base de protéine, de préférence de la vinasse/des drêches ou des hydrolysats de protéine.

9. Unité d'ensemencement (1) selon la revendication 6, **caractérisée en ce que** l'unité d'ensemencement (1) comprend des éléments répulsifs et/ou anti-limaces (7) en tant qu'autres auxiliaires, qui sont de préférence incorporés dans la couche (3), les éléments répulsifs et/ou anti-limaces (7) étant de préférence à base d'extraits de végétaux et/ou d'arômes, le cas échéant à base d'extraits éthériques de végétaux et/ou d'arômes, en particulier d'extraits de poivre de Cayenne, de margousier gingembre, d'origan, de géraniums, de ciste ou de thym.

10. Unité d'ensemencement (1) selon la revendication 6, **caractérisée en ce que** l'unité d'ensemencement (1) comprend des agents fortifiants ou des éléments d'agents fortifiants (8) en tant qu'autres auxiliaires, qui sont de préférence incorporés dans la couche (3), dans laquelle les éléments d'agents fortifiants (8) comprennent de préférence des engrais organiques, et sont de préférence un actif fortifiant obtenu à partir de silène visqueux et de lupin ;
et/ou
**caractérisée en ce que** la semence (2) est une semence de fine granulométrie, en particulier une semence (2) d'une taille < 3,5 mm, de préférence la semence (2) est choisie parmi les graines de
carottes, salades, tomates, betteraves sucrières, betteraves fourragères, colza, caméline, lin, choux, betterave rouge, radis, panais, céleri, persil, ciboulette, ou herbes médicinales telles que valériane, thym, origan, plantain lancéolé, échinacée.

11. Unité d'ensemencement (1) selon l'une des revendications 1 à 10, **caractérisée en ce que**
- la couche (3) est constituée à 5 - 30 % en poids ou à 10 - 20 % en poids du superabsorbant polymérique (5) ;
de préférence
- la couche (3) est constituée à 1 - 15 % en poids de la colle d'origine biologique ;
- la couche (3) est constituée à 5 - 30 % en poids du superabsorbant polymérique (5), et
- la couche (3) est constituée à 55 - 94 % en poids de charbon ;
en particulier
- la couche (3) est constituée à 1 - 15 % en poids de la colle d'origine biologique ;
- la couche (3) est constituée à 5 - 30 % en poids du superabsorbant polymérique (5), et/ou
- la couche (3) est constituée à 1 - 20 % en poids de substances nutritives ou d'éléments nutritifs (6) en cas de leur ajout éventuel,
- la couche (3) est constituée à 1 - 10 % en poids d'éléments répulsifs et/ou anti-limaces (7) en cas de leur ajout éventuel,
- la couche (3) est constituée à 0,001 - 1 % en poids d'agents fortifiants ou d'éléments fortifiants (8) en cas de leur ajout éventuel,
- le reste de la couche (3) est constitué de charbon.

12. Unité d'ensemencement (1) selon l'une des revendications 1 à 11, **caractérisée en ce que** le rapport du diamètre de l'unité d'ensemencement (1) au diamètre des matériaux de la couche (3), en particulier du charbon et du superabsorbant polymérique (5), est de 650/1 à 10/1, ou de 500/1 à 20/1, ou de 400/1 à 30/1, de 300/1 à 40/1 ou de 200/1 à 50/1.
